# FASCICULE DE BREVET EUROPEEN

(11) **EP 2 144 983 B1**
(45) Date de publication et mention de la délivrance du brevet: **06.09.2017**
(21) Numéro de dépôt: 08787912.8
(22) Date de dépôt: 04.04.2008
(51) Int. Cl.: C10M 169/04, C10N 30/06, C10N 30/12, F16L 15/00

(54) **COMPOSITION DE LUBRIFICATION A COEFFICIENT DE FROTTEMENT ADAPTABLE, POUR UN ELEMENT FILETE D'UN COMPOSANT DE JOINT FILETE TUBULAIRE**
SCHMIERMITTELZUSAMMENSETZUNG MIT EINSTELLBAREM REIBUNGSKOEFFIZIENTEN FÜR EIN GEWINDEELEMENT EINER KOMPONENTE EINES ROHRGEWINDEVERSCHLUSSES
LUBRICATION COMPOSITION WITH ADAPTABLE FRICTION COEFFICIENT FOR THE THREADED MEMBER OF A COMPONENT OF A TUBULAR THREADED SEAL

(30) Priorité: 11.04.2007 FR 0702634
(43) Date de publication de la demande: 20.01.2010
(73) Titulaire: VALLOUREC OIL AND GAS FRANCE, 59620 Aulnoye-Aymeries (FR); Nippon Steel & Sumitomo Metal Corporation, Tokyo 100-8071 (JP)
(72) Inventeur: PINEL, Eliette, 01600 Sainte-Euphémie (FR); GARD, Eric, 69580 Sathonay Village (FR); BAUDIN, Nicolas, 59138 Pont sur Sambre (FR)
(74) Mandataire: Casalonga
(86) Numéro de dépôt international: PCT/FR2008/000473
(87) Numéro de publication internationale: WO 2008/139058

(56) Documents cités:
- WO-A-2006/104251
- WO-A-2007/042231
- US-A- 5 173 204
- US-A- 5 431 831

## Description

L'invention concerne les composants de joints filetés tubulaires, utilisés par exemple dans des applications pétrolières, et plus précisément la lubrification de partie(s) d'élément(s) fileté(s) de composants de joints filetés tubulaires comportant une butée de vissage.

On entend ici par "composant" tout élément ou accessoire destiné à être assemblé par un filetage à un autre composant pour constituer avec cet autre composant un joint fileté tubulaire. Le composant peut par exemple être un tube de relativement grande longueur (notamment d'environ une dizaine de mètres de longueur), un manchon tubulaire de quelques dizaines de centimètres de longueur, un accessoire de ces tubes (dispositif de suspension ou "hanger", pièce de changement de section ou "cross-over", vanne de sécurité, connecteur pour tige de forage ou "tool joint", et analogues).

Un tel composant peut par exemple être utilisé pour forer ou exploiter un puits. Dans ce cas, les composants sont assemblés les uns aux autres afin d'être descendus dans les puits d'hydrocarbures ou des puits similaires et constituer une garniture de forage, une colonne de tubes de cuvelage ("casing") ou de tubage ("liners") ou encore une colonne de tubes de production ("tubing") (colonnes d'exploitation).

Les éléments filetés réalisés en extrémité d'un composant (tube ou manchon) doivent d'abord être protégés contre la corrosion durant le transport et le stockage sur site de forage et pour cela ils sont traditionnellement enduits de graisses ou d'huiles de protection en sortie d'atelier de fabrication.

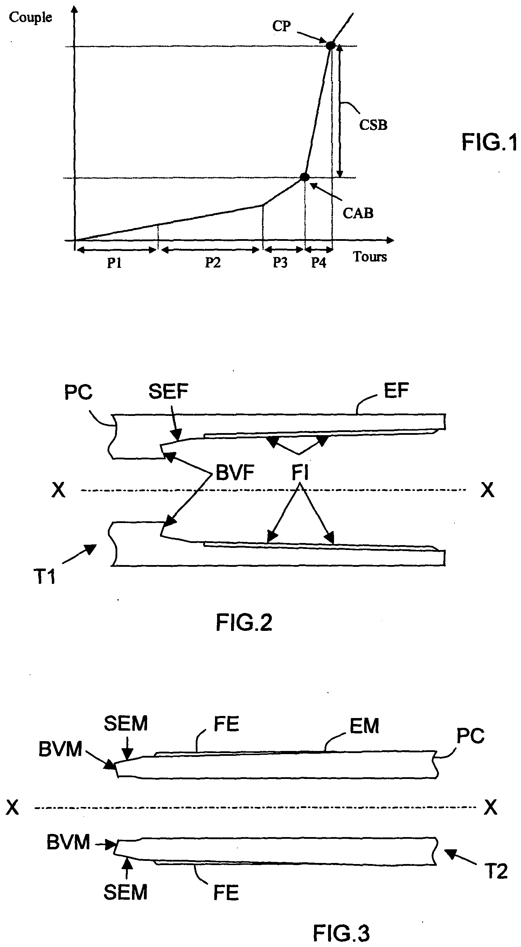

Sur puits ils peuvent avoir à subir plusieurs opérations de vissage et de dévissage. Une opération de vissage est définie par un profil (ou courbe) exprimant le couple de vissage (ou serrage) en fonction du nombre de tours de rotation effectués. Un exemple de profil de couple de vissage correspondant à un joint fileté supérieur (premium) à filetages coniques, est schématiquement illustré sur la figure 1. Comme on peut l'observer, un profil de couple de vissage peut être généralement décomposé en quatre parties. Une première partie P1 pendant laquelle les filets extérieurs de l'élément fileté mâle (ou "pin") d'un premier composant d'un joint fileté tubulaire ne présentent pas encore de serrage radial avec les filets intérieurs de l'élément fileté femelle correspondant (ou "box") d'un second composant de ce même joint fileté tubulaire. Une deuxième partie P2 pendant laquelle l'interférence géométrique des filets des éléments filetés mâle et femelle génère un serrage radial qui augmente au fur et à mesure du vissage (en générant un couple de vissage faible mais croissant). Une troisième partie P3 pendant laquelle une surface d'étanchéité en périphérie extérieure de la partie d'extrémité de l'élément fileté mâle interfère radialement avec une surface d'étanchéité correspondante de l'élément fileté femelle pour réaliser une étanchéité métal/métal. Une quatrième partie P4 pendant laquelle la surface frontale d'extrémité de l'élément fileté mâle est en butée axiale avec la surface annulaire d'une butée de vissage de l'élément fileté femelle. Cette quatrième partie P4 correspond à la phase terminale de vissage.

Le couple de vissage CAB qui correspond à la fin de la troisième partie P3 et au début de la quatrième partie P4 est appelé couple d'accostage butée (ou "shouldering torque"). Le couple de vissage CP qui correspond à la fin de la quatrième partie P4 est appelé couple de plastification (ou "plastification torque"). Au-delà de ce couple de plastification CP on considère que la butée de vissage mâle (partie d'extrémité de l'élément fileté mâle) et/ou la butée de vissage femelle (zone située derrière la surface annulaire de butée de l'élément fileté femelle) est l'objet d'une déformation plastique, laquelle peut dégrader les performances d'étanchéité du contact entre surfaces d'étanchéité. La différence entre les valeurs des couple de plastification CP et couple d'accostage butée CAB est appelée couple sur butée (ou "torque on shoulder résistance") CSB (CSB = CP - CAB).

Un joint fileté tubulaire est l'objet d'un serrage optimal en fin de vissage, qui est le gage d'une résistance mécanique optimale de l'assemblage fileté, par exemple aux efforts de traction mais aussi au dévissage accidentel en service, et de performances optimales d'étanchéité. Le concepteur de joint fileté est ainsi amené à définir pour un type de joint fileté donné une valeur de couple optimal de vissage qui doit être, pour tous les assemblages de ce type de joint, inférieure au couple de plastification CP (pour éviter la plastification des butées et les inconvénients qui en résultent) et supérieure au couple d'accostage butée CAB. Une fin de vissage sous un couple inférieur à CAB ne permet en effet pas de garantir un positionnement relatif correct des éléments mâle et femelle et par là un serrage convenable de leurs surfaces d'étanchéité. La valeur effective du couple d'accostage butée CAB fluctue beaucoup d'un assemblage à l'autre pour un même type de joint car elle dépend des diamètres effectifs des filets et des surfaces d'étanchéité mâle(s) et femelle(s), et il convient que le couple optimal de vissage soit substantiellement plus élevé que le couple d'accostage butée CAB. Par conséquent, plus la valeur du couple sur butée CSB sera grande, plus on aura de marge pour définir le couple optimal de vissage, et plus le joint fileté sera résistant aux sollicitations en service.

Pour protéger les parties sensibles, telles que les filetages, contre le grippage lors des opérations de vissage et de dévissage, les filetages sont traditionnellement débarrassés de la graisse de protection et enduits de graisses spéciales de vissage telles que la graisse selon API RP 5A3 (anciennement API Bull. 5A2). L'utilisation de telles graisses chargées en métaux lourds et/ou toxiques tels que le plomb a, outre l'inconvénient de devoir faire une seconde enduction sur puits, celui de provoquer une pollution des puits et de l'environnement, l'excès de graisse étant éjecté des filetages lors du vissage.

D'autres types de protection ont été proposés.

Ainsi, le document brevet US 6 933 264 propose de remplacer les deux enductions de graisse successives par une simple enduction, réalisée en atelier de fabrication des éléments filetés, d'une couche mince d'un lubrifiant à consistance pâteuse ou cireuse (dite semi-sèche (ou "semi-dry")) comprenant au moins un additif extrême pression à action chimique. Cette couche mince constitue un revêtement semi-sec qui présente l'inconvénient de nécessiter une protection mécanique contre une pollution par des particules de poussières ou de sable durant le transport et le stockage.

D'autres documents brevet, comme par exemple US 4 414 247, US 4 630 849, US 6 027 145, US 6 679 526 B2, US 2004/0166341 A1 et WO 2004/033951, proposent de remplacer les graisses par divers revêtements protecteurs à l'état solide appliqués en atelier de fabrication des éléments filetés, et comprenant une matrice solide adhérant au substrat dans laquelle sont dispersées des particules de lubrifiant(s) solide(s), parmi lesquels est plus particulièrement cité le disulfure de molybdène MoS₂.

Le document WO2006/104251 concerne un joint vissé comprenant une couche visqueuse lubrifiante recouverte d'un film sec solide. Le film n'est pas lubrifiant. La couche lubrifiante n'est pas à l'état solide.

Un revêtement protecteur à l'état solide, beaucoup moins polluant, a également été proposé. Il est constitué d'une matrice lubrifiante à caractéristiques viscoplastiques, notamment à base de matériau thermoplastique, chargée de particules de lubrifiant(s) solide(s) d'au moins deux classes différentes. Ce revêtement résout entre autres les problèmes de vissage et de dévissage successifs, notamment en conditions de chantier, ainsi que les problèmes de protection contre la corrosion des éléments filetés. Il offre par ailleurs une lubrification de grande qualité. Hélas, la Demanderesse s'est aperçue qu'en condition d'utilisation, notamment sur chantier, la lubrification était si bonne qu'elle ne permettait plus de serrer les extrémités mâle et femelle d'un joint fileté tubulaire conformément au profil de couple de vissage prédéfini pour ce joint fileté tubulaire. En d'autres termes, ce revêtement réduit notablement les frottements sur la butée de vissage en fin de vissage sous fortes charges de Hertz, dites "extrême pression", et sous basses vitesses de frottement, si bien que l'on atteint beaucoup plus tôt le couple de plastification, ce qui conduit à des valeurs de couple sur butée bien inférieures à celles de référence obtenues avec la graisse API RP 5A3. Il peut alors être nécessaire de réduire la valeur du couple optimal de vissage tabulée pour ce type de joint et pour la graisse API de référence, et dans des cas extrêmes la fonction de la butée peut ne plus être assurée.

L'invention a donc pour but d'améliorer la situation, et plus précisément d'offrir une composition de lubrification (ou revêtement) présentant un coefficient de frottement qui est choisi afin de permettre l'obtention d'une valeur choisie de couple sur butée définie à partir de celle qui a été obtenue pour le même joint fileté avec des éléments filetés enduits d'une graisse standard API RP 5 A3, de manière à permettre l'utilisation d'une valeur standard de couple optimal de vissage (valeur standard déterminée avec une graisse API RP 5A3).

Elle propose à cet effet une composition de lubrification filmogène de vissage de joints filetés, destinée à recouvrir au moins un filetage et une butée de vissage d'un élément fileté d'un composant d'un joint fileté tubulaire d'un film adhésif au filetage et à la butée de vissage sous-jacentes, cette butée de vissage étant destinée à s'appuyer contre une autre butée d'un autre composant de ce joint fileté tubulaire lors de la phase terminale de vissage, et cette composition de lubrification comportant une matrice.

Cette composition de lubrification de vissage de joints filetés se caractérise par le fait qu'elle comporte en outre au moins un additif de freinage (destiné à réguler le coefficient de frottement à des valeurs plus élevées tout en restant en régime lubrifié), dispersé dans la matrice, le(s)dit(s) additif(s) de freinage est (sont) constitué(s) de dispersions et/ou solutions de particules minérales ou organiques, la composition pondérale d'additifs de freinage étant comme suit :

| | |
|---|---|
| trioxyde de bismuth | 25 à 99 % |
| dioxyde de titane | 1 à 75%, |

la composition comprenant des particules de lubrifiant(s) solide(s) dispersées dans la matrice avec ledit additif de freinage,
la composition pondérale de la composition étant comme suit :

| | |
|---|---|
| matrice thermoplastique | 45 à 93 % |
| lubrifiant(s) solide(s) | 1 à 25 % |
| additif(s) de freinage | 5 à 20 %. |

Selon les contraintes de l'application considérée, la composition se présente sous une forme solide.

La composition de lubrification de vissage de joints filetés se décline selon le mode de réalisation suivant :
- le(s) additif(s) de freinage peu(ven)t sont choisis de manière à permettre l'obtention d'une valeur de couple sur butée qui est au moins égale à une valeur seuil elle-même égale, par exemple, à 70% d'une valeur de référence de couple sur butée d'une graisse de type API RP 5A3, mais pouvant être supérieure ou égale à 100% de ladite valeur de référence ;
- le(s) additif(s) de freinage est(sont) constitué(s) de dispersions et/ou solutions de particules minérales ou organiques, la composition pondérale d'additifs de freinage étant comme suit :

| | |
|---|---|
| trioxyde de bismuth | 25 à 99 % |
| dioxyde de titane | 1 à 75 % ; |

- des particules de lubrifiant(s) solide(s) sont dispersées dans la matrice avec le(s) additif(s) de freinage ;
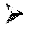 les particules de lubrifiant(s) solide(s) peuvent comporter des particules de lubrifiants d'au moins une (et de préférence au moins deux) des classes 1, 2, 3 et 4 ;
   - par exemple, les particules de lubrifiant(s) solide(s) peuvent comprendre des particules d'au moins un lubrifiant solide de classe 2 et d'au moins un lubrifiant solide de classe 1 ;
   - en variante, les particules de lubrifiant(s) solide(s) peuvent comprendre des particules d'au moins un lubrifiant solide de classe 1 et d'au moins un lubrifiant solide de classe 4 ;
   - en variante, les particules de lubrifiant(s) solide(s) peuvent comprendre des particules d'au moins un lubrifiant solide de classe 1, d'au moins un lubrifiant solide de classe 2 et d'au moins un lubrifiant solide de classe 4 ;
   - en variante ou en complément, les particules de lubrifiant(s) solide(s) peuvent comprendre au moins des particules d'au moins un lubrifiant solide de classe 1 choisi parmi le nitrure de bore et l'oxyde de zinc ;
   - en variante ou en complément, les particules de lubrifiant(s) solide(s) peuvent comprendre des particules d'au moins un lubrifiant solide de classe 2 choisi parmi le fluorure de graphite, les sulfures d'étain et les sulfures de bismuth ;
   - en variante ou en complément, les particules de lubrifiant(s) solide(s) peuvent comprendre au moins des particules de polytétrafluoréthylène en tant que lubrifiant solide de classe 4 ;
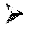 les particules de lubrifiants solides peuvent comporter des molécules d'au moins un fullerène de géométrie sphérique ou de géométrie tubulaire ;

- la matrice peut être à consistance solide, non collante au toucher et peut présenter un comportement rhéologique de type plastique ou viscoplastique ;
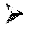 la matrice peut présenter un point de fusion compris entre 80 °C et 400 °C ;
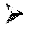 la matrice comprend au moins un polymère thermoplastique, comme par exemple le polyéthylène ou un liant acrylique ;

- la matrice peut comprendre au moins un savon métallique, comme par exemple le stéarate de zinc, le stéarate de calcium, le stéarate de lithium, le stéarate d'aluminium ou le stéarate de bismuth ;
- la matrice peut comprendre au moins une cire ou une résine d'origine végétale, animale, minérale ou de synthèse. Une résine peut comprendre un ester de colophane pour augmenter l'adhésion sur le substrat et réduire l'écaillage.
- la matrice peut comprendre au moins un inhibiteur de corrosion, comme par exemple un dérivé de sulfonate de calcium ou un oxydat de calcium ;
- la matrice peut comprendre au moins un polymère liquide d'une viscosité cinématique à 100 °C au moins égale à 850 mm²/s, comme par exemple un polyméthacrylate d'alkyle, un polybutène, un polyisobutène ou un polydialkylsiloxane ;
- la matrice peut comprendre au moins un colorant ;
- la matrice peut comporter au moins un agent tensio-actif (modificateur de tension superficielle), tel qu'un silicone ou un dérivé de silicone, modifié ou non, fonctionnalisé ou non, destiné à favoriser l'accroche sur la surface et l'homogénéité du revêtement ;
- la matrice peut comprendre au moins un antioxydant ;
- la composition pondérale d'une matrice thermoplastique peut par exemple être comme suit :

| | |
|---|---|
| polyéthylène homopolymère | 5 à 96 % |
| cire de carnauba | 2 à 30 % |
| stéarate de zinc | 2 à 30 % |
| dérivé de sulfonate de calcium | 0 à 50 % |
| polyméthacrylate d'alkyle | 0 à 15 % |
| colorant | 0 à 1 % |
| antioxydant | 0 à 1 % ; |

- dans une variante la composition pondérale d'une matrice thermoplastique sous forme d'émulsion aqueuse peut par exemple être comme suit :

| | |
|---|---|
| émulsion de polyéthylène : | 0 à 50% |
| émulsion acrylique : | 10 à 80% |
| dérivé de sulfonate de calcium : | 1 à 40% |
| polyméthacrylate d'alkyle : | 1 à 40% |
| émulsion de stéarate de zinc : | 10 à 50% ; |

- la composition pondérale de lubrifiants solides peut par exemple être comme suit :

| | |
|---|---|
| fluorure de graphite | 65 à 99 % |
| oxyde de zinc | 1 à 35 % ; |

- dans une première variante la composition pondérale de lubrifiants solides peut par exemple être comme suit :

| | |
|---|---|
| fluorure de graphite | 20 à 99 % |
| nitrure de bore | 0 à 30 % |
| polytétrafluoréthylène | 1 à 80 % ; |

- dans une deuxième variante la composition pondérale de lubrifiants solides peut par exemple être comme suit :

| | |
|---|---|
| sulfures d'étain | 20 à 99 % |
| nitrure de bore | 0 à 30 % |
| polytétrafluoréthylène | 1 à 80 % ; |

- dans une troisième variante la composition pondérale de lubrifiants solides peut par exemple être comme suit :

| | |
|---|---|
| sulfures de bismuth | 20 à 99 % |
| nitrure de bore | 0 à 30 % |
| polytétrafluoréthylène | 1 à 80 % ; |

- dans une quatrième variante la composition de lubrifiant solide peut être du fluorure de graphite seul ;
- dans une cinquième variante la composition de lubrifiant solide peut être du sulfure d'étain seul ;
- dans une sixième variante la composition de lubrifiant solide peut être du sulfure de bismuth seul ;
dans une septième variante la composition de lubrifiant solide peut être de l'oxyde de zinc seul
- la composition pondérale de la composition est comme suit:

| | |
|---|---|
| matrice thermoplastique | 45 à 93 % |
| lubrifiant(s) solide(s) | 1 à 25 % |
| additif(s) de freinage | 5 à 20 % ; |

L'invention propose également un élément fileté d'un composant d'un joint fileté tubulaire, comportant au moins un filetage et une butée de vissage contre laquelle doit s'appuyer une autre butée d'un autre composant de ce même joint fileté tubulaire à la fin de l'opération de vissage, et dans lequel au moins le filetage et la butée de vissage sont recouverts d'une couche mince, adhérente à la surface du filetage et de la butée de vissage, et constituée d'une composition de lubrification du type de celle présentée ci-avant.

Cet élément fileté selon l'invention peut se décliner selon plusieurs variantes, dont certaines au moins des caractéristiques peuvent être combinées entre-elles, et notamment :
- il peut être recouvert au moins partiellement d'une épaisseur de composition de lubrification comprise entre 10 µm et 50 µm ;
- il peut également comprendre une surface d'étanchéité destinée à être en contact serrant étanche avec une surface d'étanchéité correspondante d'un autre élément fileté après l'opération de vissage, et recouverte de la composition de lubrification ; sa butée de vissage peut être une surface annulaire de butée ;
- ses surfaces recouvertes par la composition de lubrification peuvent posséder des caractéristiques géométriques, physiques et/ou chimiques qui les rendent propres à adsorber ou absorber ladite composition de lubrification ;
- ses surfaces peuvent être préalablement revêtues d'un revêtement ou film ayant un rôle de protection contre la corrosion.

L'invention propose également un joint fileté tubulaire comprenant un élément fileté mâle et un élément fileté femelle qui pour l'un au moins d'entre eux est du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique un exemple de profil de couple de vissage (couple en fonction du nombre de tours),
- la figure 2 illustre de façon schématique, dans une vue en coupe transversale selon l'axe longitudinal XX, un exemple de réalisation d'un élément femelle d'un premier composant d'un joint fileté tubulaire de type VAM TOP,
- la figure 3 illustre de façon schématique, dans une vue en coupe transversale selon l'axe longitudinal XX, un exemple de réalisation d'un élément mâle d'un second composant d'un joint fileté tubulaire de type VAM TOP,
- la figure 4 illustre de façon schématique, dans une vue en coupe transversale selon l'axe longitudinal XX, un exemple de réalisation d'un joint fileté tubulaire de type VAM TOP constitué par assemblage des éléments mâle et femelle illustrés sur les figures 2 et 3, et
- la figure 5 illustre de façon schématique et fonctionnelle un exemple de réalisation d'une machine de type Bridgman.

Les dessins annexés pourront non seulement servir à compléter l'invention, mais aussi contribuer à sa définition, le cas échéant.

L'invention a pour but de proposer une composition de lubrification (ou revêtement) filmogène de vissage de joints filetés présentant un coefficient de frottement choisi de manière à permettre l'obtention d'une valeur de couple sur butée au moins égale à une valeur seuil sur un élément fileté d'un composant d'un joint fileté tubulaire correspondant à un profil de couple de vissage défini notamment par cette valeur de couple sur butée.

On considère dans ce qui suit que le composant est destiné au forage ou à l'exploitation de puits d'hydrocarbures et qu'il est équipé d'au moins un élément fileté mâle ou femelle d'un joint fileté tubulaire manchonné ou intégral de la famille VAM [marque déposée] ou équivalent. Mais, l'invention n'est limitée ni à ce type d'utilisation, ni au type de joint fileté tubulaire précité. L'invention concerne en effet tout type de composant de joint fileté tubulaire, quelle que soit son utilisation, dès lors qu'il comprend au moins un élément fileté mâle ou femelle muni d'au moins un filetage et d'une butée de vissage qui doivent être lubrifiés au moyen d'une même composition (ou revêtement) de lubrification. Les vitesses de rotation peuvent être de l'ordre de 10 à 30 tours/min en début de vissage après engagement des filets et de 2 à 5 tours/min au maximum en fin de vissage. Les diamètres s'étendant en général de 50 à 400 mm, les vitesses linéaires sont comprises entre 0,3 ms⁻¹ en début de vissage et 0, 005 ms⁻¹ en fin de vissage. Par ailleurs, la pression de contact est faible en début de vissage et très forte en fin de vissage en zones d'étanchéité et de butée. Les distances de frottement sont longues au niveau des filets de début de vissage à la fin. Les distances de frottement sont très faibles en zones d'étanchéité et de butée en fin de vissage. La composition de lubrification est prévue pour supporter des pressions extrêmes, par exemple de l'ordre de 1,5 GPa en fin de vissage, et des vitesses faibles tout en réduisant l'usure adhésive et le fluage du filetage. Une augmentation du frottement lors d'une forte décroissance de la vitesse et d'une croissance de la contrainte de Hertz est intéressante. Le test de Bridgmann s'avère adapté pour tester les compositions lubrifiantes envisagées, au contraire d'autres tests par exemple sur machine Amsler non pertinent dans le domaine du vissage car elle concerne un contact en régime de roulement absent lors d'un vissage d'une connexion. Ces exigences très particulières au vissage avec zones d'étanchéité et de butée font qu'une composition de lubrification conçue pour d'autres usages est à exclure d'emblée.

Comme cela est illustré sur les figures 2 et 3, un composant T1 ou T2 comprend un corps ou partie courante PC terminé par un élément (ou extrémité) fileté(e) femelle EF ou mâle EM.

Un élément fileté femelle EF (voir figure 2) comprend au moins un filetage intérieur FI et une butée de vissage BVF, qui se présente par exemple sous la forme d'une surface annulaire interne (conique convexe dans le cas d'un joint fileté de type VAM TOP) placée en aval du filetage intérieur FI.

L'extrémité libre de l'élément fileté femelle EF sert ici de référence. Par conséquent, tout ce qui se trouve après l'extrémité libre est dit en aval de celle-ci. Dans l'exemple illustré sur la figure 2, le filetage intérieur FI est placé en aval de l'extrémité libre, mais en amont de la butée de vissage BVF.

On entend ici par "intérieur" une partie disposée selon une surface (ou une surface) qui est orienté(e) vers l'axe longitudinal XX de l'élément fileté femelle EF.

Comme illustré sur la figure 2, l'élément fileté femelle EF peut éventuellement comprendre une surface d'étanchéité métal/métal SEF intercalée entre le filetage intérieur FI et la butée de vissage BVF.

Un élément fileté mâle EM (voir figure 3) comprend au moins un filetage extérieur FE et une butée de vissage BVM, qui se présente par exemple sous la forme d'une surface annulaire d'extrémité (conique concave dans le cas d'un joint fileté de type VAM TOP) placée en amont du filetage extérieur FE au niveau de l'extrémité libre.

L'extrémité libre de l'élément fileté mâle EM sert ici de référence. Par conséquent, tout ce qui se trouve après l'extrémité libre est dit en aval de celle-ci.

On entend ici par "extérieur" un élément disposé selon une surface (ou une surface) qui est orienté(e) dans une direction radialement opposée à l'axe longitudinal XX de l'élément fileté mâle EM.

Comme illustré sur la figure 3, l'élément fileté mâle EM peut éventuellement comprendre une surface d'étanchéité métal/métal SEM intercalée entre la butée de vissage BVM et le filetage extérieur FE.

On notera que le filetage intérieur FI, comme le filetage extérieur FE, peut être en une ou plusieurs parties filetées distinctes, distantes axialement et/ou radialement l'une de l'autre, et disposée(s) selon des surfaces cylindriques ou coniques.

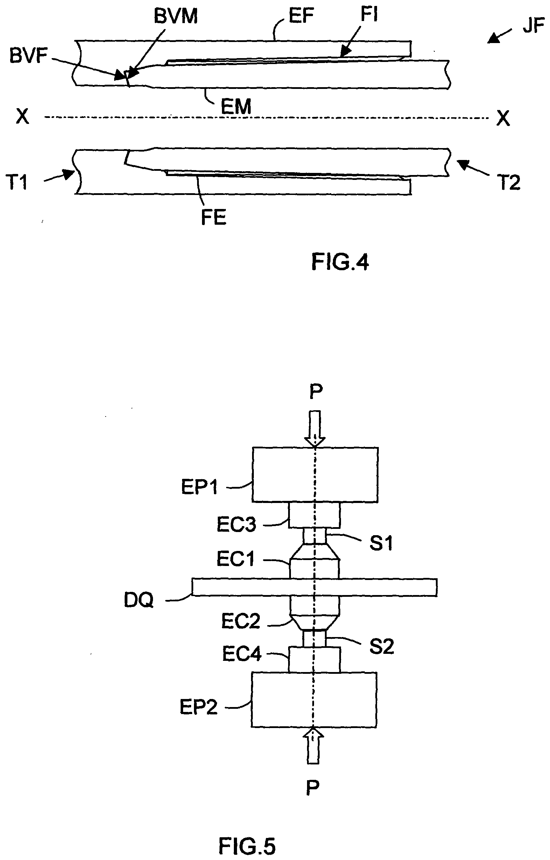

Comme cela est illustré sur la figure 4, un joint fileté tubulaire JF est constitué par l'assemblage par vissage d'un élément fileté femelle EF d'un premier composant T1 sur un élément fileté mâle EM d'un second composant T2. Ce vissage est défini par un profil de couple de vissage du type de celui illustré sur la figure 1 et caractérisé par un couple d'accostage butée CAB, un couple de plastification CP et un couple sur butée CSB (dont les définitions respectives ont été données dans la partie d'introduction).

Le vissage se fait à condition qu'au moins les butées de vissage BVF et/ou BVM et le filetage intérieur FI et/ou le filetage extérieur FE, ainsi qu'éventuellement les surfaces d'étanchéité métal/métal SEF et SEM de l'élément fileté femelle EF et/ou de l'élément fileté mâle EM aient été préalablement recouverts d'un revêtement (ou composition) de lubrification selon l'invention. Ce revêtement (ou composition) est préférentiellement déposé sur les éléments filetés femelle EF et/ou mâle EM dans leur atelier de fabrication.

La composition de lubrification selon l'invention possède un caractère filmogène. Elle est apte à former sur un substrat une couche mince (film) destinée à adhérer dessus. Elle comprend une matrice dans laquelle est dispersé au moins un additif de freinage. Comme on le verra plus loin, une telle composition de lubrification est destinée à offrir un comportement de "freinage lubrifié" pendant le régime dit de frottement en plastification de la butée de vissage (c'est-à-dire en fin de phase de serrage).

La matrice, également appelée liant, permet de fixer ou de porter un principe actif à un endroit donné. Elle sert également d'agent de cohésion à un système hétérogène et peut avoir des fonctions complétant celles des principes actifs qu'elle lie ou porte. Elle peut être de n'importe quel type, et notamment à consistance solide et non collante au toucher ou bien à consistance pâteuse (c'est-à-dire présentant un point de goutte). Mais, il est préférable qu'elle présente un comportement rhéologique de type plastique ou viscoplastique et un caractère lubrifiant.

On entend ici par "consistance solide" une consistance (ou un état) qui n'est ni liquide, ni gazeuse, ni pâteuse. Plus précisément, une matrice (ou un film) est ici dit(e) à état (ou consistance) solide lorsqu'elle (lorsqu'il) possède un point de fusion supérieur à une température correspondant à celles auxquelles sont exposés les constituants lors du stockage ou de l'utilisation, afin d'éviter qu'ils captent par leur caractère collant les poussières de l'atmosphère et/ou qu'ils contaminent les surfaces entrant en contact avec la matrice (ou le film) et/ou qu'ils polluent l'environnement par migration, coulure ou extrusion lors des vissages/dévissages.

Les mécanismes de frottement lors du vissage et du dévissage des joints filetés tubulaires sont rendus complexes par la grande variété de vitesses de frottement rencontrée. En effet les vitesses peuvent être relativement importantes au cours du vissage et quasi nulles en fin de vissage (ou phase de serrage) ou en début de dévissage (ou phase de desserrage). D'autre part, les contraintes de Hertz sont très importantes dans les mêmes périodes de frottement, conduisant alors à des régimes limites.

Il est rappelé que l'on entend par "contrainte (ou pression) de Hertz" la charge, qui est appliquée par contact sur une surface (et qui entraîne sur celle-ci une déformation élastique), divisée par cette surface. Lors de fortes contraintes de Hertz, les matériaux solides non plastiques peuvent subir des cisaillements internes réduisant leur durée de vie par fatigue du matériau alors que les matériaux solides plastiques subissent ce cisaillement selon des lois d'écoulement avec génération de surface de frottement.

Pour résoudre les problèmes dus aux contraintes cinétiques précitées, il est avantageux d'utiliser une matrice dont les propriétés sont à caractéristique plastique et permettent un écoulement visqueux sous contraintes tout en répondant à toutes les situations de vitesse rencontrées. Une matrice formée de plusieurs constituants est encore plus performante en présence d'une grande variété de cisaillements. Elle permet en effet de maintenir en place les autres éléments actifs et contribue à l'élaboration de feuils ou films de transfert stables.

Pour obtenir un comportement rhéologique de type viscoplastique, on peut par exemple utiliser une matrice à l'état solide comprenant au moins un polymère (ou résine) thermoplastique faisant partie de l'ensemble des polymères viscoplastiques, comme par exemple le polyéthylène ou un liant acrylique. Le polyéthylène est intéressant car il ne pose pas de problème d'application lié à une haute viscosité à l'état fondu comme c'est le cas d'autres polymères viscoplastiques tels que le polyamide 6, le polyamide 11 et le polypropylène. Parmi les polyéthylènes, il est encore plus avantageux d'utiliser ceux qui ont des points de fusion supérieurs à 105 °C. Mais, on peut utiliser une matrice présentant un point de fusion compris entre 80 °C et 400 °C.

On rappelle que le terme thermoplastique qualifie un polymère fusible susceptible d'être, de manière réversible, ramolli puis fondu par chauffage respectivement aux températures T_{G} et T_{F} (température de transition vitreuse et température de fusion) et solidifié puis vitrifié par refroidissement. Les polymères thermoplastiques sont transformés sans réaction chimique contrairement aux polymères thermodurcissables. Les polymères thermoplastiques sont utilisés dans l'invention afin d'obtenir sous contrainte de frottement un écoulement visqueux tout en conservant de manière statique une structure solide sèche (non collante au toucher) et stable. Au contraire, généralement, les polymères thermodurcissables n'ont pas ou ont peu de comportement visqueux sous contrainte.

Afin de répondre dans les conditions quasi-statiques aux contraintes de lubrification limite avec conjonction de charges de frottement très élevées, on peut disperser dans la matrice au moins un type de lubrifiant solide.

On entend ici par "lubrifiant solide" un corps solide et stable qui en s'intercalant entre deux surfaces de frottement permet d'abaisser le coefficient de frottement et de réduire l'usure et l'endommagement des surfaces. Ces corps peuvent être classés en différentes catégories définies par leur mécanisme de fonctionnement et leur structure :
- classe 1: corps solides devant leurs propriétés lubrifiantes à leur structure cristalline, ayant des propriétés de clivage sous faible effort de cisaillement entre certains plans cristallins, par exemple le graphite, l'oxyde de zinc (ZnO) ou le nitrure de bore (BN),
- classe 2: corps solides devant leurs propriétés lubrifiantes d'une part à leur structure cristalline comme indiqué en classe 1 et d'autre part à un élément chimique de leur composition réactif avec les surfaces métalliques conférant une propriété supplémentaire de fixation en surface favorisant l'établissement d'une couche de transfert lubrifiante relativement stable, par exemple le disulfure de molybdène MoS₂, le fluorure de graphite, les sulfures d'étain, les sulfures de bismuth, ou le disulfure de tungstène,
- classe 3: corps solides devant leurs propriétés lubrifiantes à leur réactivité chimique avec les surfaces métalliques susceptibles de créer des composés complexes plastiques ou clivables lubrifiants, par exemple certains composés chimiques de type thiosulfates, ou le Desilube 88 commercialisé par Desilube Technologies Inc.,
- classe 4: corps solides devant leurs propriétés lubrifiantes à un comportement plastique ou viscoplastique sous contrainte de frottement, notamment lorsqu'ils sont soumis à un cisaillement, par exemple le polytétrafluoréthylène (PTFE), les polyéthylènes, les polypropylènes, les polyacétals ou les polyamides.

Cette classification est par exemple décrite dans les documents du cours intitulé "Les lubrifiants solides", dispensé par Mr Eric Gard à l'Ecole Nationale Supérieure des Pétroles et Moteurs (France).

Outre ces classes, figure la catégorie particulière des fullerènes, classée en tant que sous classe de la classe 1 sous la nomenclature 1-3. Il est rappelé que les fullerènes sont des molécules de forme sphérique ou tubulaire, en structure monocouche ou multicouches, ayant des propriétés d'abaissement du frottement et génératrices de films de transfert stables sur les surfaces en frottement. On pourra notamment utiliser, par exemple, les fullerènes de carbone ou les fullerènes de type disulfures métalliques.

Comme le sait l'homme de l'art, les lubrifiants solides en régime de lubrification à sec et hydrodynamique, lorsqu'ils sont dispersés dans un matériau fluide ou viscoplastique, ont tendance à se fixer sur les surfaces de manière stable en modifiant les caractéristiques de frottement de celles-ci. Ils sont transférés et liés à la surface par liaison chimique ou physico-chimique ce qui entraîne une grande résistance à l'usure et une amélioration des propriétés de frottement. Selon la nature des solides, cela confère aux surfaces une protection anti-usure, des propriétés de résistance et anti-usure aux pressions extrêmes générées par de fortes contraintes de charges en surface (contraintes de Hertz), et un faible coefficient de frottement dans un large spectre de charges et de vitesses de frottement. Ces propriétés de génération de film de transfert (ou de feuil) sont utilisées pour les types de frottement où les surfaces sont sollicitées de manière répétée, ainsi que cela se produit lors des vissages et dévissages des joints filetés tubulaires.

La composition selon l'invention peut ne comporter qu'un seul lubrifiant solide, comme par exemple du fluorure de graphite seul ou du sulfure d'étain seul ou du sulfure de bismuth seul, ou encore de l'oxyde de zinc seul.

Cependant l'utilisation combinée d'au moins deux lubrifiants solides appartenant à des classes différentes permet d'obtenir des synergies et donc des performances de lubrification très élevées. On entend ici par "synergie" une situation dans laquelle la combinaison de lubrifiants solides ayant des propriétés de base conduit à des performances supérieures au cumul des propriétés de base desdits lubrifiants solides pris séparément.

Les lubrifiants solides utilisés préférentiellement dans l'invention comprennent au moins des composés de classe 2 peu utilisés jusqu'ici, tels que les fluorures de graphite et les sulfures d'étain ou de bismuth. Ils différent des produits lubrifiants solides traditionnels, tels que le graphite (susceptible de faciliter l'apparition de corrosion), le disulfure de molybdène (connu pour être instable notamment en présence d'humidité et pour libérer de l'oxyde de soufre corrosif pour l'acier ou du sulfure d'hydrogène rendant éventuellement l'acier sensible à la rupture différée sous contrainte par l'hydrogène ("sulfide stress cracking" ou SSC)) ou le disulfure de tungstène, par leur plus grande capacité de liaison avec les métaux et leurs performances aux pressions extrêmes largement plus élevées. Utilisés en synergie avec des lubrifiants solides d'autres classes, ils permettent d'atteindre des performances particulièrement remarquables.

Les composés de classe 2 précités peuvent être utilisés sous forme de particules avec des particules de lubrifiant solide d'au moins l'une des classes 1, 3 et 4. Ainsi, on peut utiliser des particules d'au moins un lubrifiant solide de classe 2 et d'au moins un lubrifiant solide de classe 4, ou des particules d'au moins un lubrifiant solide de classe 1 et d'au moins un lubrifiant solide de classe 2, ou des particules d'au moins un lubrifiant solide de classe 2 et d'au moins un lubrifiant solide de classe 3, ou encore des particules d'au moins un lubrifiant solide de classe 1, d'au moins un lubrifiant solide de classe 2 et d'au moins un lubrifiant solide de classe 4.

Une augmentation de 50 % du nombre de cycles de vissage et de dévissage en conditions de chantier a été observée avec des systèmes associant les classes 1, 2 et 4 par rapport à une synergie de type classe 2 / classe 4.

A titre d'exemple, les particules de lubrifiant solide de classe 1 peuvent être des particules de nitrure de bore ou d'oxyde de zinc. Egalement à titre d'exemple, les particules de lubrifiant solide de classe 2 peuvent être des particules de fluorure de graphite, de sulfure d'étain, de sulfure de tungstène ou de sulfure de bismuth. Les particules de classe 3 peuvent êtres des particules de Desilube 88 (commercialisé par Desilube Technologies Inc.). Toujours à titre d'exemple, les particules de lubrifiant solide de classe 4 peuvent être des particules de polytétrafluoréthylène (PTFE). Des synergies particulièrement performantes sont obtenues avec les combinaisons suivantes : fluorure de graphite (classe 2) / PTFE (classe 4) / nitrure de bore (classe 1), disulfure d'étain (classe 2) / PTFE (classe 4) / nitrure de bore (classe 1), sulfure de bismuth (classe 2) / PTFE (classe 4) / nitrure de bore (classe 1), et CFx (classe 2) / ZnO (classe 1) / PTFE (classe 4).

Comme indiqué plus haut, la composition de lubrification selon l'invention comporte, en complément de la matrice (ou liant) et des éventuelles particules de lubrifiant(s) solide(s)), au moins un additif (ou pigment) de freinage. Chaque additif (ou pigment) de freinage est dispersé dans la matrice.

Le(s) additif(s) (ou pigment(s)) de freinage est (sont) choisi(s) en fonction du profil de couple de vissage du joint fileté tubulaire dont il doit recouvrir partiellement l'un au moins des éléments filetés mâle EM et femelle EF. Plus précisément, il(s) est (sont) choisi(s) de manière à conférer à la composition, en complément de ses propriétés de lubrification, un coefficient de frottement qui est choisi pour permettre l'obtention d'une valeur de couple sur butée CSB au moins égale à une valeur seuil.

Si l'on prend, par exemple, comme valeur de référence de couple sur butée CSB celle qui est définie par un profil de couple de vissage d'un joint fileté tubulaire donné recouvert partiellement d'une graisse de type API RP 5A3 (ou API Bull. 5A2), alors la valeur seuil du couple sur butée CSB pour ce même joint fileté tubulaire peut être choisie au moins égale à 70% de cette valeur de référence. Bien entendu, selon le type d'utilisation, on pourra préférer que la composition permette l'obtention d'une valeur de couple sur butée CSB voisine de 70% (par valeur supérieure ou égale) de la valeur de référence ou plutôt voisine de 100% de cette valeur de référence, voire même supérieure à 100% de la valeur de référence.

La valeur de 70% est ici choisie de manière à conserver une marge suffisante pour permettre l'utilisation du couple de vissage le plus bas qui permet un serrage de qualité.

Des valeurs seuil de couple sur butée inférieures à 70% de la valeur de référence peuvent bien entendu être choisies dans certaines applications. Mais, elles ne sont pas suffisantes pour les applications dans lesquelles les joints filetés tubulaires sont vissés sous des couples relativement élevés. En effet, dans ce cas on ne peut plus visser le joint fileté sous le couple nominal standard (prévu avec enduction des éléments filetés avec de la graisse standard API) sauf à risquer dans certains cas à ce que la butée de vissage de l'un au moins des deux éléments filetés mâle EM et femelle EF fasse l'objet de déformations plastiques (irréversibles) ou à ce que le critère de vissage correct (rapport entre couple d'accostage butée CAB et couple optimal) ne soit pas respecté.

On comprendra que chaque additif de freinage est choisi en fonction de propriétés physiques spécifiques permettant de conférer à la composition selon l'invention une capacité à "freiner" le mouvement appliqué lors du vissage en régime lubrifié en fonction du profil de couple de vissage du joint fileté tubulaire, et donc du mode de réalisation de ce dernier. En effet, deux matériaux en frottement relatif et séparés par un troisième corps intercalaire (ici la composition de lubrification) doivent leurs propriétés à au moins deux facteurs : le comportement rhéologique du troisième corps et le comportement de certains composés solides participant à la composition dudit troisième corps.

Le comportement rhéologique du troisième corps peut-être hydrodynamique dans le cas d'une huile, viscoplastique dans le cas de certaines cires et certains polymères, ou granulaire dans le cas de certains composés minéraux non ductiles ou de très forte dureté.

Le comportement de certains composés solides participant à la composition du troisième corps varie selon certains paramètres :
- la concentration du troisième corps dans le milieu hydrodynamique ou viscoplastique,
- la dureté ou capacité d'écrasement des particules de composés solides, qui est caractérisée par la valeur de dureté Mohs,
- la capacité de clivage des cristaux de composés solides avec des efforts plus ou moins faibles, laquelle dépend principalement de la structure cristalline,
- les interactions particulaires qui dépendent de la forme et de l'énergie de surface des particules de composés solides, et des capacités de liaison entre ces particules (attraction entre atomes via des liaisons de type Van der Waals, fonction de la nature chimique des particules) ; ces interactions ayant tendance à s'opposer au mouvement,
- les comportements rhéologiques inverses (ou à thixotropie inverse) de certains additifs organiques de très haut poids moléculaire qui permettent de s'opposer à un effort de cisaillement et donc au mouvement.

Chaque additif de freinage est donc constitué de dispersions et/ou solutions de particules minérales ou organiques,la composition pondérale d'additifs de freinage étant comme suit :

| | |
|---|---|
| trioxyde de bismuth | 25 à 99 % |
| dioxyde de titane | 1 à 75%. |

Il est mélangé dans la composition de lubrification des additifs de freinage qui présentent des propriétés physiques spécifiques différentes, qui sont conjointement utiles au freinage. Ainsi, dans le cas d'une matrice thermoplastique (ou viscoplastique) on utilise une combinaison de dioxyde de titane, dont le comportement structurel est freinant (clivage à forte résistance), et de trioxyde de bismuth, dont la dureté Mohs est moyenne de manière à ne pas endommager les éléments filetés du joint fileté tubulaire. Avec une telle combinaison, on peut obtenir une valeur de couple sur butée CSB comprise entre environ 70% et environ 80%.

La composition pondérale d'additifs de freinage est comme suit :

| | |
|---|---|
| trioxyde de bismuth | 25 à 99 % |
| dioxyde de titane | 1 à 75 %. |

On considère dans ce qui suit que la composition de lubrification comprend une matrice solide, un ou plusieurs lubrifiant(s) solide(s) et un ou plusieurs additif(s) de freinage.

Il est important de noter que les proportions respectives des trois types de constituant de la composition de lubrification dépendent principalement du type (thermoplastique, thermodurcissable ou autre) de la matrice solide utilisée.

Lorsque la matrice solide est de type thermoplastique, la composition de lubrification comprend une proportion de matrice comprise entre environ 45% et environ 93%, une proportion de lubrifiant(s) solide(s) comprise entre environ 1% et environ 25%, et une proportion d'additif(s) de freinage comprise entre environ 5% et environ 20%.

A titre d'exemple purement illustratif et non limitatif, la composition pondérale d'une matrice thermoplastique peut par exemple être comme suit :

| | |
|---|---|
| polyéthylène homopolymère | 5 à 96 % |
| cire de carnauba | 2 à 30 % |
| stéarate de zinc | 2 à 30 % |
| dérivé de sulfonate de calcium | 0 à 50 % |
| polyméthacrylate d'alkyle | 0 à 15 % |
| colorant | 0 à 1 % |
| antioxydant | 0 à 1 %. |

Toujours à titre d'exemple purement illustratif et non limitatif, la composition pondérale d'une matrice thermoplastique sous forme d'émulsion aqueuse peut par exemple être comme suit :

| | |
|---|---|
| émulsion de polyéthylène : | 0 à 50% |
| émulsion acrylique : | 10 à 80% |
| dérivé de sulfonate de calcium : | 1 à 40% |
| polyméthacrylate d'alkyle : | 1 à 40% |
| émulsion de stéarate de zinc : | 10 à 50%. |

Par ailleurs, on comprendra que les variations des différentes proportions des trois types de constituant de la composition de lubrification, les unes par rapport aux autres, dépendent notamment du type de joint fileté tubulaire qu'elle doit partiellement recouvrir et des contraintes que ce joint fileté tubulaire doit subir, notamment en condition de chantier.

La détermination des compositions pondérales respectives des trois types de constituant (matrice solide, lubrifiant(s) solide(s) et additif(s) de freinage) d'une composition de lubrification peut par exemple se faire au moyen de simulations théoriques effectuées avec un programme informatique tournant sur un ordinateur et de tests tribologiques effectuées au moyen d'une machine que l'homme de l'art (spécialiste en tribologie) connaît sous le nom de machine de Bridgman. Ce type de machine est notamment décrit dans l'article de D. Kuhlmann-Wilsdorf et al. "Plastic flow between Bridgman anvils under high pressures", J. Mater. Res., Vol. 6, N° 12, Dec 1991.

Un exemple schématique et fonctionnel d'une machine de Bridgman est illustré sur la figure 5. Cette machine comprend :
- un disque DQ pouvant être entraîné en rotation selon des vitesses choisies,
- une première enclume EC1, de préférence de type conique, solidarisée fixement à une première face du disque DQ,
- une deuxième enclume EC2, de préférence de type conique, solidarisée fixement à une deuxième face du disque DQ, opposée à sa première face,
- des premier EP1 et second EP2 éléments de pression, comme par exemple des pistons, propres à exercer des pressions axiales choisies P,
- une troisième enclume EC3, de préférence de type cylindrique, solidarisée fixement à une face du premier élément de pression EP1,
- une quatrième enclume EC4, de préférence de type cylindrique, solidarisée fixement à une face du second élément de pression EP2.

Pour tester une composition de lubrification, on recouvre avec cette dernière deux morceaux d'un matériau identique à celui constituant un élément fileté, de manière à former des premier S1 et second S2 échantillons. Puis, on intercale le premier échantillon S1 entre les faces libres des première EC1 et troisième EC3 enclumes, et le second échantillon S2 entre les faces libres des deuxième EC2 et quatrième EC4 enclumes. Ensuite, on fait tourner le disque DQ à une vitesse choisie tout en appliquant une pression axiale choisie P (par exemple de l'ordre de 1,5 GPa) avec chacun des premier EP1 et second EP2 éléments de pression, et l'on mesure le couple de vissage subi par chaque échantillon S1, S2.

La pression axiale, la vitesse de rotation et l'angle de rotation sont choisis dans l'essai Bridgman pour simuler la pression de Hertz et la vitesse relative des surfaces de butée en fin de vissage.

Grâce à une telle machine, on peut fixer plusieurs paires différentes (couple de vissage, vitesse de rotation) pour mesurer les couples de vissage correspondants sur les échantillons S1 et S2, et ainsi vérifier si ces échantillons S1 et S2 suivent à peu près un profil de couple de vissage donné, et notamment s'ils permettent l'obtention d'une valeur de couple sur butée CSB au moins égale à une valeur seuil choisie par rapport à ce profil. On comprendra que ce sont les essais effectués avec la machine Bridgman qui permettent d'établir une corrélation entre le couple mesuré pour des échantillons enduits d'une composition de lubrification selon l'invention et un pourcentage de couple sur butée CSB obtenu lors des opérations de vissage d'éléments filetés enduits de la même composition de lubrification.

Afin d'améliorer certaines propriétés choisies de la composition selon l'invention, sa matrice peut comporter des éléments additionnels, tels que ceux mentionnés de façon non exhaustive ci-après.

Ainsi, une plasticité améliorée de la matrice de la composition peut être obtenue par l'adjonction de composés chimiques de type savon métallique, parmi lesquels les savons (ou stéarates) de calcium, de lithium, d'aluminium, de bismuth et de zinc qui donnent d'excellents résultats en nombre de vissages et dévissages dans les conditions de chantier ainsi qu'une amélioration des propriétés de réagglomération des débris. Il est rappelé que l'on entend par "savon métallique" des composés fusibles tels que les savons de métaux alcalins et alcalino-terreux et d'autres métaux. A titre d'exemple, on peut utiliser un savon métallique tel que le stéarate de zinc qui offre une synergie avec certains inhibiteurs de corrosion.

Par exemple, pour améliorer la lubrification offerte par la composition, et notamment optimiser ses propriétés de blocage et réagglomération des débris lors des opérations de vissage-dévissage, sa matrice peut comprendre un corps gras naturel, tel qu'une cire d'origine végétale, animale, minérale ou de synthèse. Il est rappelé que l'on entend par "cire" des substances fusibles à propriétés lubrifiantes d'origines diverses (minérale notamment issue de la distillation du pétrole, végétale, animale ou de synthèse) dont la consistance plus ou moins pâteuse ou dure et la température de fusion et le point de goutte peuvent varier dans d'importantes proportions selon leur nature. A titre d'exemple, on peut utiliser la cire de carnauba. La matrice peut présenter une adhésion accrue lorsqu'elle comprend une résine (minérale, végétale ou synthétique), par exemple une résine terpénique ou un dérivé de résine terpénique.

On notera qu'en fonction des teneurs nécessaires en inhibiteurs de corrosion, une dégradation des propriétés de piégeage ou réagglomération des débris peut être observée. Pour remédier à cet inconvénient, on peut utiliser des polymères très visqueux tels que les polyméthacrylates d'alkyle (PAMA), les polybutènes, les polyisobutènes et les polysiloxanes. Ainsi, d'excellents résultats de réagglomération des débris peuvent être obtenus avec un PAMA d'une viscosité cinématique de 850 mm²/s à 100 °C, commercialisé par la société ROHMAX sous la dénomination VISCOPLEX 6-950.

Par exemple, pour améliorer la protection de la surface que la composition doit recouvrir contre différents modes de corrosion, sa matrice peut comprendre un inhibiteur de corrosion. Il est rappelé que l'on entend par "inhibiteur de corrosion" un additif conférant à un matériau liquide ou solide appliqué sur une surface la capacité de la protéger par un mécanisme chimique, électrochimique ou physico-chimique. A titre d'exemple, on peut utiliser un dérivé de sulfonate de calcium ou un oxydat de calcium et plus particulièrement l'un de ceux provenant de l'association d'oxyde de calcium et de sulfonates de calcium dans un milieu constitué de cires, de résines pétrolières ou de paraffines tels que les produits commercialisés par la société LUBRIZOL sous les dénominations ALOX® 2211 Y et ALOX® 606. Mais d'autres composés peuvent également être utilisés tels que ceux de type amine, aminoborate, amine quaternaire, sulfonate suralcalinisé sur polyalfaoléfine, phosphosilicate de strontium, phosphosilicate de zinc, borate carboxylate.

La résistance à la corrosion peut encore être améliorée en associant l'inhibiteur de corrosion sélectionné à des composés agissant selon d'autres mécanismes bloquant la corrosion. Comme indiqué plus haut, le stéarate de zinc en particulier montre des propriétés synergiques avec les inhibiteurs de corrosion tout en contribuant largement au comportement lubrifiant de la matrice.

Le test principal de la protection anticorrosion est l'essai au brouillard salin réalisé selon la norme ISO 9227 et évalué par l'indice Re selon ISO EN 2846-3 sur plaque traitée par phosphatation au manganèse (dépôt de 8 à 20 g/m² de phosphate. On peut obtenir des améliorations de performance à l'essai au brouillard salin selon ces normes (augmentation de 20 % du temps d'apparition de la corrosion) en insérant des particules d'oxyde de zinc de taille nanométrique (200 nm en moyenne), appliquées en dispersion simple dans l'eau.

Par exemple, pour permettre à la composition de bloquer de manière stable les sites qui sont créés par les rugosités de surface et de bloquer les processus d'endommagement des surfaces et de leur propagation tout en créant une structure continue de type clivable en surface, la composition peut comprendre des molécules d'au moins un fullerène de géométrie sphérique. Il est rappelé que l'on entend par "fullerènes" des matériaux moléculaires ayant une structure sous forme de tubes fermés ou ouverts ou de sphères fermées, en monocouche ou en multicouches. Les fullerènes sphériques ont une taille de quelques dizaines de nm en monocouche et supérieure à environ 100 nm en multicouche. On notera qu'en raison de leur taille et de leur capacité d'interactivité, les fullerènes peuvent avoir un effet déterminant sur la rhéologie du milieu en introduisant un phénomène additionnel de résistance visqueuse au mouvement.

Par exemple, pour permettre une identification visuelle des surfaces traitées, la matrice de la composition peut comprendre au moins un colorant. Tout type de colorant organique connu peut être utilisé dès lors que sa teneur ne dégrade pas les performances de frottement. On peut par exemple utiliser des colorants à des teneurs d'environ 1 %.

Par exemple, pour préserver le revêtement de la dégradation par oxydation due par exemple à la chaleur ou à l'exposition aux rayons UV, la matrice de la composition peut comprendre au moins un antioxydant. Il est rappelé que les composés polyphénoliques, les dérivés de naphtylamine et les phosphites organiques constituent les principales familles d'antioxydants. Par exemple, on peut utiliser une combinaison des produits IRGANOX® L150 (système d'antioxydants polyphénoliques et aminés) et IRGAFOS® 168 (phosphite de tris(2,4-di-tert-butylphényle)) de la société Ciba-Geigy.

Une préparation de surface des parties à lubrifier des éléments filetés mâle EM et femelle EF peut s'avérer avantageuse. En effet, des essais de vissage et de dévissage montrent que pour obtenir l'établissement d'un film de transfert correct, il est préférable de modifier la surface à revêtir de manière à la rendre apte à adsorber ou absorber la composition de lubrification soit par un traitement mécanique tel qu'un sablage ou un grenaillage, soit par une modification physique ou chimique des surfaces au moyen d'un traitement réactif ou non réactif à base de dépôts minéraux cristallisés en surface, d'une attaque chimique par exemple par un acide, d'un traitement de phosphatation au zinc ou au manganèse ou d'une oxalatation conduisant à une couche de conversion chimique de la surface. Parmi ces traitements de surface, la phosphatation est préférée car elle permet d'obtenir une surface d'accrochage correcte conduisant à l'établissement d'un film de transfert résistant lors du frottement et très stable, ainsi qu'une protection anticorrosion de base.

Il peut par ailleurs être souhaitable de procéder à une préparation de surface complémentaire consistant notamment à imprégner la porosité de la surface par des nanomatériaux dont la taille leur permet de s'insérer dans les porosités. L'objectif de cette imprégnation est de bloquer et de saturer les sites créés par la porosité par un matériau à action passivante protégeant la surface contre la corrosion tout en conservant une bonne adhérence du revêtement.

On présente ci-après deux exemples non limitatifs de composition. Ces exemples sont bien adaptés aux joints filetés tubulaires de type VAM TOP HC de diamètre nominal 177,8 mm (7 in) et de masse linéique 43,15 kg/m (29 lb/ft) en acier faiblement allié (grade L80) selon la fiche technique éditée par la division OCTG de la société Vallourec & Mannesmann Tubes. L'élément fileté mâle a par exemple subi avant application du revêtement (composition) une phosphatation au zinc (poids de couche compris entre 4 et 20 g/m²) et l'élément fileté femelle une phosphatation au manganèse (poids de couche compris entre 8 et 20 g/m²). Les éléments filetés mâle EM et femelle EF sont préchauffés à 130 °C, puis on leur applique par pulvérisation thermique une couche de 35 µm d'épaisseur d'une composition de lubrification maintenue fondue à 150 °C, ayant la composition pondérale suivante :
- Polyéthylène commercialisé par la société CLARIANT sous la dénomination LICOWAX® PE 520 : 9 %,
- Cire de carnauba: 15 %,
- Stéarate de zinc : 15 %,
- PAMA commercialisé par la société ROHMAX sous la dénomination VISCOPLEX® 6-950 : 5 %,
- Dérivé de sulfonate de calcium commercialisé par la société LUBRIZOL sous la dénomination ALOX® 606 : 40 %,
- Fluorure de graphite : 3,5 %,
- Oxyde de zinc : 1%,
- Dioxyde de titane : 5%,
- Trioxyde de bismuth : 5%,
- Silicone : 1%,
- Antioxydants commercialisés par la société Ciba-Geigy :

| | |
|---|---|
| IRGANOX® L150 | 0,3 % |
| IRGAFOS® 168 | 0,2 %. |

Dans cet exemple, la matrice est de type viscoplastique, les lubrifiants solides sont composés d'oxyde de zinc et de fluorure de graphite, et les additifs de freinage sont constitués de dioxyde de titane (à fort effort de clivage) et de trioxyde de bismuth (à dureté Mohs modérée).

Dans une variante, la composition comprend de 1 à 60% en masse, préférablement de 5 à 30%, d'une résine ester de colophane, par exemple la DERTOLYNE P2L de la Société LES DERIVES RESINIQUES ET TERPENIQUES (DRT).

Une composition comparative peut être la suivante :
- Cire de Carnauba : 14%
- Stéarate de Zinc : 14%
- Résine Dertolyne P2L : 20%
- Viscoplex 6-950 (Polyalkyl metacrylate) : 8%
- Halox SZP 391 (Phosphosilicate de calcium et de strontium) : 29%
- Fluorure de graphite : 7%
- Bi2O3 : 5%
- PTFE : 2%
- Nitrure de bore : 1%

Dans une autre composition comparative, on peut par exemple appliquer par pulvérisation thermique sur les éléments filetés mâle EM et femelle EF préchauffés à 130 °C une couche de 35 µm d'épaisseur d'une composition de lubrification maintenue fondue à 150 °C, ayant la composition pondérale suivante :
- Polyéthylène commercialisé par la société CLARIANT sous la dénomination LICO WAX® PE 520 : 26 %,
- Cire de carnauba : 10 %,
- Stéarate de zinc : 20 %,
- PAMA commercialisé par la société ROHMAX sous la dénomination VISCOPLEX® 6-950 : 5 %,
- Dérivé de sulfonate de calcium commercialisé par la société LUBRIZOL sous la dénomination ALOX® 606 : 30 %,
- Fluorure de graphite : 3,5 %,
- Dioxyde de titane : 5%,
- Antioxydants commercialisés par la société Ciba-Geigy :

| | |
|---|---|
| IRGANOX® L150 | 0,3 % |
| IRGAFOS® 168 | 0,2 %, |

Dans cette autre composition comparative, la matrice est également de type viscoplastique, le lubrifiant solide est composé de fluorure de graphite, et l'additif de freinage est constitué de dioxyde de titane.

La technique précitée de pulvérisation à l'état fondu consiste à maintenir la composition de lubrification à haute température en phase liquide et à la pulvériser au moyen de pistolets de pulvérisation thermostatés. La composition de lubrification est chauffée entre 10 °C et 50 °C au-dessus de sa température de fusion et pulvérisée sur une surface préchauffée à une température supérieure à la température de fusion afin d'obtenir un bon recouvrement de la surface.

Au lieu d'utiliser cette technique de pulvérisation à l'état fondu, on peut par exemple pulvériser la composition de lubrification sous forme d'émulsion aqueuse. L'émulsion et le substrat peuvent être à température ambiante, un temps de séchage étant alors nécessaire. Ce temps de séchage peut être considérablement réduit en préchauffant la composition de lubrification entre 60 °C et 80 °C et/ou la surface entre 50 °C et 150 °C.

L'invention ne se limite pas aux exemples de composition de lubrification et d'élément fileté (mâle ou femelle) décrits ci-avant, seulement à titre d'exemple, mais elle englobe toutes les variantes que pourra envisager l'homme de l'art dans le cadre des revendications ci-après.

Ainsi, l'invention concerne également d'autres types d'élément fileté que ceux décrits ci-avant (VAM TOP). Par exemple, elle concerne également les éléments filetés de joints filetés tubulaires à butée interne, manchonnés (par exemple ceux de type NEW VAM, VAM ACE, DINOVAM, VAM HW ST) ou intégraux "flush" ou "semi-flush" (par exemple ceux de type VAM SL, VAM MUST, VAM HP, VAM HTF).

L'invention peut aussi concerner des éléments de joints filetés pour tiges et autres composants de forage rotatif définis par la spécification API 7 ou par des spécifications plus sévères propres à certains producteurs (telles que, par exemple et de manière non limitative, les joints filetés supérieurs VAM EIS, VAM TAURUS, TORQMASTER TM4 et les dérivés et évolutions de ces joints).

Dans ce qui précède on a principalement décrit une composition de lubrification comprenant une matrice à consistance solide, un ou plusieurs lubrifiant(s) solide(s) et un ou plusieurs additif(s) de freinage.

## Revendications

1. Composition de lubrification filmogène de vissage de joints filetés, propre à recouvrir au moins un filetage (FE, FI) et une butée de vissage (BVM, BVF) d'un élément fileté (EM, EF) de composant (T2, T1) d'un joint fileté tubulaire (JF) d'un film à l'état solide, adhésif audit filetage (FE, FI) et à ladite butée de vissage (BVM, BVF), ladite butée de vissage (BVM, BVF) étant destinée à s'appuyer contre une autre butée (BVF, BVM) d'un autre composant (T1, T2) dudit joint fileté tubulaire (JF) en phase terminale de vissage, et ladite composition de lubrification comportant une matrice, **caractérisée en ce qu'**elle comporte en outre au moins un additif de freinage dispersé dans ladite matrice, le(s)dit(s) additif(s) de freinage est (sont) constitué(s) de dispersions et/ou solutions de particules minérales ou organiques, la composition pondérale d'additifs de freinage étant comme suit :
| | |
|---|---|
| trioxyde de bismuth | 25 à 99 % |
| dioxyde de titane | 1 à 75%, |
la composition comprenant des particules de lubrifiant(s) solide(s) dispersées dans la matrice avec ledit additif de freinage,
la composition pondérale de la composition étant comme suit :
| | |
|---|---|
| matrice thermoplastique | 45 à 93 % |
| lubrifiant(s) solide(s) | 1 à 25 % |
| additif(s) de freinage | 5 à 20 %. |

2. Composition de lubrification selon l'une des revendications précédentes, **caractérisée en ce que** lesdites particules de lubrifiant(s) solide(s) comportent des particules de lubrifiants d'au moins une des classes 1, 2 et 4, préférablement des particules, d'au moins un lubrifiant solide de classe 2 et d'au moins un lubrifiant solide de classe 1 ou des particules d'au moins un lubrifiant solide de classe 2 et d'au moins un lubrifiant solide de classe 4,
le ou les lubrifiants de classe 1 étant choisis parmi le graphite, l'oxyde de zinc ou le nitrure de bore,
le ou les lubrifiants de classe 2 étant choisis parmi le disulfure de molybdène MoS₂, le fluorure de graphite, les sulfures d'étain, les sulfures de bismuth, ou le disulfure de tungstène,
le ou les lubrifiants de classe 4 étant choisis parmi le polytétrafluoréthylène, les polyéthylènes, les polypropylènes, les polyacétals ou les polyamides.

3. Composition de lubrification selon la revendication 2 **caractérisée en ce que** les particules de lubrifiant(s) solide(s) comprennent des particules d'au moins un lubrifiant solide de classe 1, d'au moins un lubrifiant solide de classe 2 et d'au moins un lubrifiant solide de classe 4, les particules de lubrifiant(s) solide(s) comprenant au moins des particules d'au moins un lubrifiant solide de classe 1 choisi parmi l'oxyde de zinc et le nitrure de bore, les particules de lubrifiant(s) solide(s) comprenant des particules d'au moins un lubrifiant solide de classe 2 choisi parmi le fluorure de graphite, les sulfures d'étain, les sulfures de bismuth et le disulfure de tungstène, les particules de lubrifiant(s) solide(s) comprenant au moins des particules de polytétrafluoréthylène en tant que lubrifiant solide de classe 4, les particules de lubrifiant(s) solide(s) comprenant au moins des molécules d'au moins un fullerène de géométrie sphérique ou tubulaire.

4. Composition de lubrification selon l'une des revendications 1 à 3, **caractérisée en ce que** ladite matrice est à consistance solide non collante au toucher et présente un comportement rhéologique choisi dans un groupe comprenant le type plastique et le type viscoplastique, ladite matrice présentant un point de fusion compris entre 80°C et 400°C, ladite matrice comprenant au moins un polymère thermoplastique choisi parmi le polyéthylène et un liant acrylique.

5. Composition de lubrification selon l'une des revendications précédentes, **caractérisée en ce que** ladite matrice comprend au moins un savon métallique, choisi parmi du stéarate de zinc, du stéarate de calcium, du stéarate de lithium, du stéarate d'aluminium et du stéarate de bismuth, au moins une cire d'origine végétale, animale, minérale ou de synthèse, au moins un inhibiteur de corrosion choisi parmi un dérivé de sulfonate de calcium et un oxydat de calcium, au moins un polymère liquide d'une viscosité cinématique à 100°C au moins égale 850 mm²/s, choisi parmi un polyméthacrylate d'alkyle, un polybutène, un polyisobutène et un polydialkylsiloxane, au moins un colorant, au moins un agent tensio-actif destiné à favoriser l'accroche sur la surface et l'homogénéité du revêtement et au moins un antioxydant.

6. Elément fileté (EM, EF) de composant (T2, T1) d'un joint fileté tubulaire (JF), ledit élément fileté (EM, EF) comportant au moins un filetage (FE, FI) et une butée de vissage (BVM, BVF) contre laquelle doit s'appuyer une autre butée (BVF, BVM) d'un autre composant (T1, T2) dudit joint fileté tubulaire (JF) en fin d'opération de vissage, **caractérisé en ce qu'**au moins ledit filetage (FE. FI) et ladite butée de vissage (BVM, BVF) sont recouverts d'une couche mince, adhérente à la surface du filetage (FE, FI) et de la butée de vissage (BVM, BVF), et constituée de la composition de lubrification selon l'une des revendications précédentes.

7. Élément fileté selon la revendication 6 **caractérisé en ce qu'**il est recouvert au moins partiellement d une épaisseur de composition de lubrification comprise entre 10 µm et 50 µm et **en ce que** les surfaces recouvertes par la composition de lubrification possèdent des caractéristiques géométriques, physiques et/ou chimiques qui les rendent propres à adsorber ou absorber ladite composition de lubrification, les surfaces pouvant être préalablement revêtues d'un revêtement ou film ayant un rôle de protection contre la corrosion préalablement au dépôt de la composition de lubrification.

8. Joint fileté tubulaire comprenant un élément fileté mâle et un élément fileté femelle, **caractérisé en ce que** l'un au moins desdits éléments filetés est conforme l'une des revendications 6 ou 7.

## Patentansprüche

1. Filmbildende Schmierungszusammensetzung zum Verschrauben von Schraubelementen, die dazu dient, mindestens ein Gewinde (FE, FI) und einen Schraubanschlag (BVM, BVF) eines Schraubelements (EM, EF) einer Komponente (T2, T1) einer rohrförmigen Schraubverbindung (JF) mit einem Feststofffilm zu bedecken, der am Gewinde (FE, FI) und an dem Schraubanschlag (BVM, BVF) klebt, wobei der Schraubanschlag (BVM, BVF) dazu bestimmt ist, an einem anderen Anschlag (BVF, BVM) einer anderen Komponente (T1, T2) der rohrförmigen Schraubverbindung (JF) in einer Endphase des Verschraubens anzuliegen, und die Schmierungszusammensetzung umfassend eine Matrix, **dadurch gekennzeichnet, dass** sie außerdem mindestens ein Bremsadditiv umfast, das in der Matrix dispergiert ist, das/die Additiv(e) aus Dispersionen und/oder Lösungen mineraler oder organischer Partikel besteht/bestehen, wobei die Gewichtszusammensetzung der Bremsadditive wie folgt ist:
| | |
|---|---|
| Wismuttrioxid | 25 bis 99 % |
| Titandioxid | 1 bis 75 %, |
die Zusammensetzung umfassend Partikel von Feststoffschmiermittel(n), die in der Matrix mit dem Bremsadditiv dispergiert sind, wobei die Gewichtszusammensetzung der Zusammensetzung wie folgt ist:
| | |
|---|---|
| thermoplastische Matrix | 45 bis 93 % |
| Feststoffschmiermittel | 1 bis 25 % |
| Bremsadditiv(e) | 5 bis 20 %. |

2. Schmierungszusammensetzung nach einem der vorherigen Ansprüche, **dadurch gekennzeichnet, dass** die
Feststoffschmiermittelpartikel Schmiermittelpartikel von mindestens einer der Klassen 1, 2 und 4 umfassen, vorzugsweise Partikel von mindestens einem Feststoffschmiermittel der Klasse 2 und von mindestens einem Feststoffschmiermittel der Klasse 1, oder Partikel von mindestens einem Feststoffschmiermittel der Klasse 2 und von mindestens einem Feststoffschmiermittel der Klasse 4,
wobei das oder die Schmiermittel der Klasse 1 ausgewählt sind aus Grafit, Zinkoxid oder Bornitrid,
das oder die Schmiermittel der Klasse 2 ausgewählt sind aus Molybdändisulfid MoS2, Grafitfluorid, Zinnsulfiden, Wismutsulfiden oder Wolframdisulfid,
das oder die Schmiermittel der Klasse 4 ausgewählt sind aus Polytetrafluorethylen, Polyethylenen, Polypropylenen, Polyacetalen oder Polyamiden.

3. Schmierungszusammensetzung nach Anspruch 2 **dadurch gekennzeichnet, dass** die Feststoffschmiermittelpartikel Partikel von mindestens einem Feststoffschmiermittel der Klasse 1, von mindestens einem Feststoffschmiermittel der Klasse 2 und von mindestens einem Feststoffschmiermittel der Klasse 4 umfassen, die Feststoffschmiermittelpartikel mindestens Partikel von mindestens einem Feststoffschmiermittel der Klasse 1 umfassen, ausgewählt aus Zinkoxid und Bornitrid, die Feststoffschmiermittelpartikel Partikel von mindestens einem Feststoffschmiermittel der Klasse 2 umfassen, ausgewählt aus Grafitsulfid, Zinnsulfiden, Wismutsulfiden und Wolframsulfiden, die Feststoffschmiermittelpartikel mindestens Partikel aus Polytetrafluorethylen umfassen, was das Feststoffschmiermittel der Klasse 4 anbelangt, die Feststoffschmiermittelpartikel mindestens Moleküle von mindestens einem Fulleren mit kugelförmiger oder rohrförmiger Geometrie umfassen.

4. Schmierungszusammensetzung nach einem der Ansprüche 1 bis 3, **dadurch gekennzeichnet, dass** die Matrix eine feste Konsistenz hat, bei Berührung nicht klebrig ist, und ein rheologisches Verhalten aufweist, ausgewählt aus einer Gruppe umfassen den plastischen und den viskosplatischen Typ, wobei die Matrix einen Schmelzpunkt zwischen 80 °C und 400 °C aufweist, die Matrix umfassend mindestens ein thermoplastisches Polymer ausgewählt aus Polyethylen und einem acrylischen Binder.

5. Schmierungszusammensetzung nach einem der vorherigen Ansprüche, **dadurch gekennzeichnet, dass** die Matrix mindestens eine metallische Seife aufweist, ausgewählt aus Zinkstearat, Calciumstearat, Lithiumstearat, Aluminiumstearat und Wismutstearat, mindestens ein Wachs pflanzlichen, tierischen, mineralen oder synthetischen Ursprungs, mindestens einen Korrosionshemmer, ausgewählt aus einem Calciumsulfonat-Derivat und Calciumoxidat, mindestens ein flüssiges Polymer mit einer kinematischen Viskosität bei 100 °C von mindestens gleich 850 mm²/s, ausgewählt aus einem Alkylpolymethacrylat, einem Polybuten, einem Polyisobuten und einem Polydialkylsiloxan, mindestens einen Farbstoff, mindestens ein Netzmittel, das dazu bestimmt ist, die Anhaftung an der Oberfläche und die Homogenität der Beschichtung zu begünstigen, und mindestens ein Antioxidans.

6. Schraubelement (EM, EF) einer Komponente (T2, T1) einer rohrförmigen Schraubverbindung (JF), das Schraubelement (EM, EF) umfassend mindestens ein Gewinde (FE, F1) und einen Schraubanschlag (BVM, BVF), gegen den ein anderer Anschlag (BVF, BVM) einer anderen Komponente (T1, T2) der rohrförmigen Schraubverbindung (JF) am Ende des Schraubvorgangs anliegen soll, **dadurch gekennzeichnet, dass** mindestens das Gewinde (FE, F1) und der Schraubanschlag (BVM, BVF) mit einer feinen Schicht abgedeckt sind, die an der Oberfläche des Gewindes (FE, FI) und des Schraubanschlags (BVM, BVF) anhaftet und aus der Schmierungszusammensetzung nach einem der vorherigen Ansprüche besteht.

7. Schraubelement nach Anspruch 6 **dadurch gekennzeichnet, dass** es mindestens teilweise mit einer Schmierungszusammensetzungs-Stärke zwischen 10 µm und 50 µm abgedeckt ist, und dass die abgedeckten Oberflächen von der Schmierungszusammensetzung geometrische, physikalische und/oder chemische Charakteristiken besitzen, die sie geeignet machen, die Schmierungszusammensetzung zu adsorbieren oder zu absorbieren, wobei die Oberflächen vorher mit einer Beschichtung oder einem Film beschichtet werden können, die eine Schutzaufgabe gegen Korrosion haben, bevor die Schmierungszusammensetzung aufgebracht wird.

8. Rohrförmige Schraubverbindung umfassend ein Außengewinde-Schraubelement und ein Innengewinde-Schraubelement, **dadurch gekennzeichnet, dass** mindestens die Schraubelemente gemäß dem Anspruch 6 oder 7 sind.

## Claims

1. A film-forming lubricating composition for make up of threaded joints suitable for covering at least one thread (FE, F1), and a shoulder (BVM, BVF) of a threaded element (EM, EF) of a component (T2, T1) of a tubular threaded seal (JF) with a solid film adhering to said thread (FE, FI) and to said shoulder (BVM, BVF), said shoulder (BVM, BVF) being intended to rest against another shoulder (BVF, BVM) of another component (T1, T2) of said tubular threaded seal (JF) at the end phase of make up, and said lubricating composition comprising a matrix, **characterized in that** it further comprises at least one locking additive dispersed in said matrix, said locking additive(s) is/are formed of dispersions and/or solutions of mineral or organic particles, the weighted composition of locking additives being as follows:
| | |
|---|---|
| bismuth trioxide | 25 to 99% |
| titanium dioxide | 1 to 75%, |
the composition comprising particles of solid lubricant(s) dispersed in the matrix with locking additive, the weighted composition of the composition being as follows:
| | |
|---|---|
| thermoplastic matrix | 45 to 93% |
| solid lubricant(s) | 1 to 25% |
| locking additive(s) | 5 to 20%. |

2. A lubricating composition according to one of the preceding claims, **characterized in that** said particles of solid lubricant comprise particles of lubricants of at least one of classes 1, 2, and 4, preferably particles, of at least one class 2 solid lubricant and at least one class 1 solid lubricant, or particles of at least one class 2 solid lubricant and at least one class 4 solid lubricant,
the class 1 lubricant(s) being chosen from among graphite, zinc oxide, or boron nitride,
the class 2 lubricant(s) being chosen from among molybdenum disulphide MoS2, graphite fluoride, tin sulphides, bismuth sulphides, or tungsten disulphide,
the class 4 lubricant(s) being chosen from among polytetrafluorethylene, polyethylenes, polypropylenes, polyacetals or polyamides.

3. A lubricating composition according to claim 2, **characterized in that** the particles of solid lubricant(s) comprise particles of at least one class 1 solid lubricant, at least one class 2 solid lubricant, and at least one class 4 solid lubricant, the particle(s) of solid lubricant(s) comprising at least particles of at least one class 1 solid lubricant chosen from among zinc oxide and boron nitride, the particles of solid lubricant(s) comprising particles of at least one class 2 solid lubricant chosen from among graphite fluoride, tin sulphides, bismuth sulphides, and tungsten disulphide, the particles of solid lubricant(s) comprising at least particles of polytetrafluorethylene as a class 4 solid lubricant, the particles of solid lubricant(s) comprising at least molecules of at least one fullerene of spherical or tubular geometry.

4. A lubricating composition according to one of the claims 1 to 3, **characterized in that** said matrix is of solid consistency, not adhesive to the touch, and exhibits a rheological behaviour chosen from a group comprising plastic and viscoplastic, said matrix having a melting point between 80 °C and 400 °C, said matrix comprising at least one thermoplastic polymer chosen from among polyethylene and an acrylic binder.

5. A lubricating composition according to one of the preceding claims, **characterized in that** said matrix comprises at least one metallic soap, chosen from among zinc stearate, calcium stearate, lithium stearate, aluminium stearate, and bismuth stearate, at least one wax of plant, animal, mineral, or synthetic origin, at least one corrosion inhibitor chosen from among a derivative of calcium sulphonate and a calcium oxidate, at least one liquid polymer of a kinematic viscosity at 100 °C greater than or equal to 850 mm²/s, chosen from among an alkyl polymethacrylate, a polybutene, a polyisobutene, and a polydialkylsiloxane, at least one dye, at least one surfactant intended to encourage the surface adhesion and homogeneity of the coating and at least one antioxidant.

6. A threaded element (EM, EF) of a component (T2, T1) of a tubular threaded seal (JF), said threaded element (EM, EF) comprising at least one thread (FE, F1) and a shoulder (BVM, BVF) against which another shoulder (BVF, BVM) of another component (T1, T2) of said tubular threaded seal (JF) is to rest at the end of the make up operation, **characterized in that** at least said thread (FE, F1) and said shoulder (BVM, BVF) are coated with a thin layer, adhering to the surface of the threading (FE, FI) and the shoulder (BVM, BVF), and formed of the lubricating composition according to one of the previous claims.

7. A threaded element according to claim 6, **characterized in that** it is at least partially covered by a layer of lubricating composition between 10 µm and 50 µm thick, and **in that** the surfaces covered by the lubricating composition have geometric, physical, and/or chemical characteristics that make them capable of adsorbing or absorbing said lubricating composition, the surfaces potentially being previously coated with a coating or film that plays a protective role against corrosion prior to the depositing of the lubricating composition.

8. A tubular threaded seal comprising a male threaded element and a female threaded element, **characterized in that** at least one of said threaded elements is compliant with one of the claims 6 or 7.
